# EUROPEAN PATENT SPECIFICATION

(11) **EP 2 835 385 B1**
(45) Date of publication and mention of the grant of the patent: **25.12.2019**
(21) Application number: 14179871.0
(22) Date of filing: 05.08.2014
(51) Int. Cl.: C08F 220/58, C09D 133/24, C08F 2/10, C08F 2/50, A61L 15/60, C08F 230/02, H01R 4/00, C08F 220/38, C08F 228/02, C09D 133/02, C09D 143/02

(54) **POLY-ELECTROLYTE POLYMER COMPOSITION AND ITS USE**
POLY-ELEKTROLYTPOLYMERZUSAMMENSETZUNG UND IHRE VERWENDUNG
COMPOSITION POLYMÈRE POLY-ÉLECTROLYTE ET SON UTILISATION

(30) Priority: 05.08.2013 BE 201300526
(43) Date of publication of application: 11.02.2015
(73) Proprietor: Chemstream BVBA, 2650 Edegem (BE)
(72) Inventor: Deroover, Geert, 2650 EDEGEM (BE); Mannekens, Els, 2650 EDEGEM (BE)
(74) Representative: Nollen, Maarten Dirk-Johan

(56) References cited:
- EP-A1- 0 068 189
- EP-A1- 0 940 148
- WO-A1-01/41866
- US-A- 4 585 845

## Description

### Field of the invention

The present invention relates to a process for coating a substrate with a poly-electrolyte composition for generation of a copolymer capable of forming a water insoluble hydrogel. It relates particularly to a poly-electrolyte composition that is negatively charged when fully dissociated in aqueous environment.

It further relates to the resulting coated substrate.

### Background of the invention

Poly-electrolyte compositions and hydrogels formed thereof are known per se. An important class thereof are the so-called super-absorbent polymers (SAP). When brought into contact with water, such super-absorbent polymers are able to absorb water in an amount that exceeds their own weight, and more preferably even hundred-fold.

The present invention in particular relates to poly-electrolyte compositions from which a copolymer can be formed for use as a water insoluble hydrogel (i.e. by water absorption) and suitable for use in various application fields, for example, but not limited thereto, in water treatment, in oil recovery applications, in chemicals used in construction, for medical applications, personal care, coatings, adhesives, as viscosity regulators, for the protection of optical and electrical cables, etc. Such polymer compositions will also be referred to as super-absorbent polymers, or SAPs.

The total absorption and swelling capacity of such SAPs is herein determined, together with other factors, by the nature of the crosslinkers and the degree of crosslinking used to prepare the geld, as taught by K. Kabiri et al, "Synthesis of fast-swelling superabsorbent hydrogels: effect of crosslinker type and concentration on porosity and absorption rate", 2003, European Polymer Journal 39(7), 1341-1348.

Hydrogels with a low crosslinking degree usually have a higher absorption capacity en demonstrate a stronger swelling. The gelation has a tendency to be softer and more adhering. On the other hand, polymers with a high degree of crosslinking have the tendency of demonstrating a lower absorption capacity and lower swelling. Their gel strength is more contained, and they are capable of retaining their form better even when a limited pressure is exerted on them from the outside.

These hydrogels find currently their most wide application in personal care products for single use, but are also used to stop penetration of water in underground electrical and data transmission cables, as water retaining means in horticulture, to control leakage or waste of aqueous fluids, in filtration and flame retarding products, in bandages for wound treatment, and in a wide variety of other large scaled and important industrial applications.

Generally, these hydrogels are prepared by polymerization of acrylic acid mixed with sodium hydroxide, in the presence of an initiator, so as to obtain a sodium polyacrylate. Other materials that are generally used include poly acrylamide copolymer, ethylene maleic acid anhydride copolymer, crosslinked carboxymethylcellulose, polyvinylalcohol copolymer, crosslinked polyethyleneoxide, a copolymer of starch and polyacrylonitril and many more.

The term 'hydrogel' is to be understood in this context as a crosslinked or blended network of hydrophilic polymeric chains, which network has absorbed and retains quantities of water. The network is herein capable of absorbing and retaining quantities of water that are large in comparison to its own mass. The water is herein retained in the network by means of osmotic pressure. The term 'hydrogel' is herein used to distinguish the state of water absorption from the poly-electrolyte polymer composition in itself.

The polymers are produced, in the largest part starting from reactive acrylic monomers, by means of a radical initiated polymerization under the influence of a suitable source of energy, in particular under the influence of heat using a thermal polymerization initiator; by means of a photochemical reaction using a photo-initiator and suitable light source such as UV radiation; or by exposing the monomer mixture to high energy radiation such as gamma or electron beam radiation.

Three main methods are commonly used for the preparation of the polymers through radical polymerization: gel polymerization, suspension polymerization and solution polymerization, such as known from, f.i., F. Buchholz, A. Graham and T. Andrew in "Modern Superabsorbent Polymer Technology", 1997, John Wiley & Sons, ISBN 0-471-19411-5.

GB13 80807 in the name of Lubrizol Corporation teaches a method of water treatment, in particular a method for flocculating solid compounds suspended in a suspension, wherein use is made of water soluble polymers of N-sulpho-carbohydrate-substituted acrylamides. These polymers may be obtained by polymerization, either separately or in combination with other polymerisable vinyl monomers of the corresponding monomeric N-sulpho-carbohydrate-substituted acrylamides, of which 2-acrylamido-propane sulphonic acid and 2-acrylamido-2-methylpropane sulphonic acid are typical examples. When used as a flocculant, these polymers are used either in the acid form or in the form of a salt, the latter usually being an alkali metal or ammonium salt, and preferably a sodium or potassium salt.

Conventionally, the prepared super-absorbent polymers are cut into small pieces, dried and milled to obtain a powder. The powder is thereafter integrated into the final application, such as diapers and such materials, However, this integration process requires that the powder is bound, for instance with an adhesive or as part of a paste, to the substrate, such as a yarn, or a textile or paper substrate. That is industrially not a simple process, for instance because water or humidity would result in swelling of the super-absorbent polymer prior to its use. If the humidity cannot be removed again by means of drying, the effective absorbing capacity will reduce.

Therefore, EP1522545 discloses a method of applying a coating of super-absorbent polymers on a substrate, as well as a method of impregnating a yarn. Both forms will hereinafter be generally referred to as the coating of a carrier. In this coating process, the carrier is immersed into a bath comprising a formulation of the monomers. The polymerization is then started by addition of a photoinitiator. The polymerization process of EP1522545 is based on acrylic acid monomers. The first monomer is a monomer containing an acrylic acid group with the formula H₂C=CR₁R₂, wherein R₁=H or an alkyl group with 1-10 carbon atoms and R₂=COOH. The second monomer is a compound generally selected from a variety of acrylic acids, acrylates, acrylamides.

This known polymerization process entails some specific features. First of all, it does not make use of a separate solvent, but the first monomer is at least partially soluble in the second monomer. This seems beneficial from a process perspective, since organic solvents are preferably to be avoided. Furthermore, the first monomer is neutralized with an inorganic base, before the polymerization is started but after forming the mixture of the first and the second monomer. In this neutralization, the free (acrylic) acid is converted into its salt form, since the salt form is better suitable for absorbing water. According to EP1522545, the degree of neutralization depends on the solubility of the neutralized first monomer in the second monomer.

EP1522545 further adds that it is possible to opt for a lower degree of neutralization for process-engineering reasons. However, such lower degree of neutralization would inherently also limit the absorption of the super-absorbent polymer, and thus the swelling degree. Example 1 of EP1522545 uses acrylic acid as the first monomer and hydroxypropyl methacrylate (HPMA) as the second monomer. The use of HPMA appears necessary in the coating process, in order to ensure that a polymer is formed that has sufficient structure to constitute a coating. However, HPMA is disadvantageous in that this monomer does not contribute to the degree of swelling. Rather, this monomer also acts as a crosslinker. The degree of crosslinking therewith becomes dependent on the amount of the second monomer, which amount cannot be controlled independently, but is chosen to ensure required structural properties of the coating. Moreover, the structure may become inconsistent. In fact, internal cyclisation reactions occur in competition with the crosslinking, as a consequence of which the final polymer structure becomes inconsistent, as discussed in the publication of Jeannine Elliott et al, in "Structure and swelling of poly(acrylic acid) hydrogels", Polymer, volume 45, issue 5, March 2004, pages 1503-1510.

The lacking control is also apparent from Example 2 and Table 1 of EP1522545, wherein the absorption is shown for seven production batches of the polymer. The absorption varies herein from 177 ml/g to 278 ml/g, which is significant. The present Applicant has studied EP1522545 so as to reproduce this. However, the Example 2 does not specify the manufacture of the polymer. Moreover, the Figures 2 and 3 indicate that the water absorption before heating in the oven is merely 40 ml/g rather than something around 200 ml/g.

Moreover, Applicant carried out a reworking of Example 1 of EP1522545, however using hydroxyethylacrylate (HEA) instead of HPMA and acrylic acid. HEA is however also mentioned in the list of suitable second monomers in EP1522545. The advantage of HEA is that it is already in the salt form, so that no neutralization is necessary. An alternative photo-initiator was used, since the specified initiator Lumilink 400 is not commercially available. This photo-initiator is a pure UV-cross-linker, so that it may be added in the reaction mixture, rather than only during the reaction. This reworking is shown in Comparative Example 1. The resulting degree of swelling was merely 6.

Example 1 of EP1522545 mentions a number of further process conditions that appear disadvantageous. First of all, the pH of the reaction mixture must be held between 4.5 and 5.5 during neutralization, so as to prevent that the mixture becomes solid at room temperature, i.e. that the acrylate flocculates or polymerizes.. However, considerable amounts of acidic carboxyl groups are present and remain in the non-ionic state under these conditions. More particularly, the upper pH-limit of 5.5 effectively defines a maximum to the degree of neutralization. The non-neutralized carboxyl groups in the non-ionic state do not significantly contribute to the swelling.

Furthermore, the mixture has to be cooled to 30°C and needs to remain below this temperature. Even in the mixture with HPMA, the acrylic acid is highly volatile. At temperatures above 30°C, it will evaporate. This may not only change the properties of the resulting polymer, but it is also problematic for the safety: acrylic acid is toxic and inflammable.

US4,585,845 discloses a process for making polyelectrolyte polymers wherein use is made of mixtures of acrylamide and 2-acrylamido-2-methyl-propane-1-sulphonic acid. Generally minor quantities of a vinylic acid and/or acrylic acid are added, in addition to a specific crosslinker being a vinylphosphonic acid anhydride. Resulting swelling ratios are up to 65g/g, according to application example 3. Three different polymerization processes are mentioned for the polymers: emulsion polymerization, precipitation polymerization and gel polymerization.

### Summary of the invention

It is therefore an object of the invention to provide an improved polyelectrolyte composition, to be suitable for use as a coating on a substrate, or as a substrate itself, including further the option of impregnating a material with the hydrogel as a coating.

It is therefore a further object of the present invention to provide a process of applying a coating of a super-absorbent polymer to a substrate, which does not have the limitations of the known process.

According to the invention, an aqueous polyelectrolyte composition is provided that comprises a first and a second hydrophilic monomer, a photochemical radical initiator and a crosslinker, wherein upon exposure to UV-radiation polymerization of the polyelectrolyte composition into an insoluble polyelectrolyte polymer occurs, wherein
- the first monomer is selected from the group consisting of vinylic sulphonic acids, vinyl phosphonic acids or a water soluble salt thereof as shown in the Figures I-IV, wherein R1, R2, R3 represent hydrogen, optionally substituted alkyl or aryl group, Q represents an alkylene group, preferably methylene or ethylene, and M represents hydrogen or cation, and 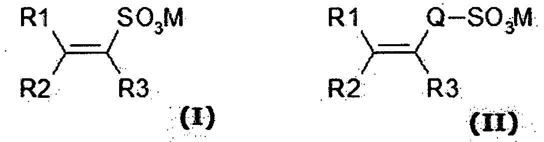 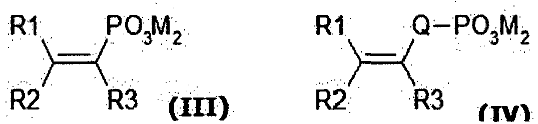
- the second monomer is a vinylic monomer with a double bond, which monomer comprises at least one acid group and a spacer group arranged between the double bond and the acid group, and
- the second monomer is different from the first monomer and at least a compound selected from the group consisting of monomers comprising an acid group being either in a free acid form or in a form of a water soluble salt, and of which the logarithm of the acid dissociation constant (pKa) in the free acid form has a value smaller than 3.5, and
- the molar ratio between the first and the second monomer is at most 1.

According to the invention, this aqueous composition is polymerized to form a insoluble polymer that is able to absorb water or humidity and thus act as a hydrogel. Preferably the formation occurs in situ, i.e. on a carrier such as a substrate or a fiber or even in a mould wherein any carrier or film may be present. In other words, the hydrogel can be directly applied in the form wherein it is desired rather than needing to mill into particles and integrate the thus milled polymer particles

According to the invention, this object is further achieved in a method for applying an aqueous polyelectrolyte composition to a carrier, which poly-electrolyte composition is suitable for forming a water insoluble copolymer for use as hydrogel, comprising the steps of:
- Providing the carrier with an aqueous reaction mixture comprising at least a first monomer and a second monomer, and
- causing the monomers to polymerize on the carrier under the influence of an energy source, wherein radical formation occurs and the polymerization is started, and wherein crosslinking between individual polymer chains occurs, so as to form the water insoluble, crosslinked copolymer. The monomers are herein chosen in accordance with claim 1 and particularly as defined hereinabove.

In a third aspect of the invention, this object is achieved in a substrate obtainable with the method of the invention. This substrate more particularly comprises a water insoluble copolymer, wherein the copolymer is formed by means of free radical polymerization of at least a first hydrophilic monomer and a second hydrophilic monomer, with the first and second monomer chosen as specified hereinabove.

According to a further aspect, the invention provides a sealed package comprising an aqueous reaction mixture comprising a first and a second monomer, a crosslinker and a photoinitiator sensitive to UV radiation of a UV wavelength, and suitable for polymerization into a water insoluble polyelectrolyte copolymer, which sealed package is not transparent for the UV wavelength, and wherein the first and the second monomer are defined as specified hereinabove.

It has been found that the aqueous poly-electrolyte compositions of the invention are particularly capable of forming hydrogels that have a long term stability, higher swelling degree and water absorbing capacity, and this in a wider field of disadvantageous conditions, particularly in a wider range of pH values, than with the composition in accordance with the prior art. A high swelling degree is more particularly a swelling degree of at least 150, more preferably at least 200. Even higher swelling degrees of over 300 are feasible in accordance with the invention. Moreover, the polymerization occurs efficiently under simple, safe, environmentally friendly and energy-saving conditions. It is furthermore relevant to be mentioned that the copolymer-composition may be construed from safe monomers (such as sodium vinyl sulphonate and the sodium salt of 2-acrylamido-2-methyl-1-propane sulphonic acid) and that the resulting copolymers turn out not toxic for the aquatic environment.

An additional advantage is that substrates provided or coated with the polyelectrolyte copolymer of the invention, such as components of optical or electrical cables, may be produced efficiently and at high speed on existing machines and in accordance with established industrial techniques, in that the polymerization occurs in situ, i.e. after application of the monomers on the substrate. Herein, it is feasible to start the polymerization by means of UV-irradiation, thus as desired by the user, resulting that there is no risk of polymerization during storage as long as the aqueous composition is kept outside UV-light.

The invention is based on the insight, that high swelling degrees by formation of a copolymer of a vinylic monomers provided with acid groups, wherein the second monomer contains a spacer group between the double bond and the acid group. It has been observed in investigations that a composition with merely first monomers could not be polymerized. The inventors have understood that this is due to repulsion of the small first monomers due to their negatively charged acid anions. By means of adding a second monomer with a spacer group, such repulsion may be prevented and the polymerization results in a copolymer. Suitably, the molar ratio of the first monomer to the second monomer is at most one. As a result, it is believed that the resulting copolymer may be regular in shape, possibly the first and the second monomer in alternating arrangement. This is evidently dependent on the molar ratio between the first and second monomer. In any case, it is expected that a first monomer will be present, at least substantially, inside a polymer chain between second monomers.

The second monomer particularly, but suitably also the first monomer contains a sufficiently low pKa, such that they are easily dissociated. This avoids the need for any neutralization step. Moreover, in this way, all first and second monomers contribute to the swelling of the resulting copolymer. The density of swelling groups in the copolymer is therefore very high, leading to a good performance as a hydrogel.

More preferably, the spacer group in the second monomer is electron-withdrawing. In this manner, the spacer group does not hinder, but rather stimulates the polymerization process. Examples of electron-withdrawing groups are for instance a carbonyl group, an ether group, a mercapto (-S-) group. Preferably, the electron-withdrawing spacer group itself is acid, or comprises an acid substituent, therewith contributing itself to the ability of water absorption and hence swelling.

Preferably, the second monomer is chosen from the group consisting of compounds of any of the formula (V)-(X) wherein R1, R2, R3 represent hydrogen, optionally substituted alkyl or aryl group, Q represents an optionally substituted alkylene, arylene or alkyleneoxide entity and M represents hydrogen or cation, and wherein n=0 or 1 in formula (V) and (VI), n= 1 or 2 in formula (VII) and x = 1 or 2 and y=3-x in formula (VIII).

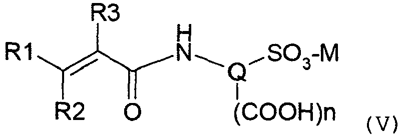

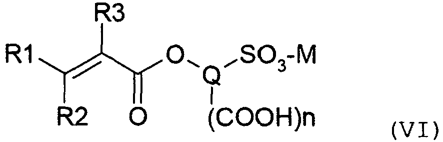

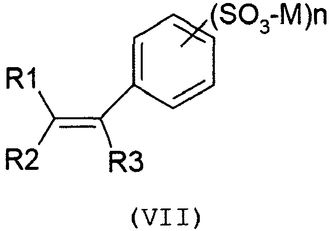

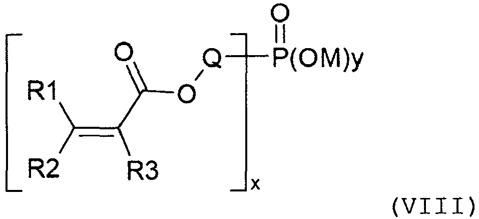

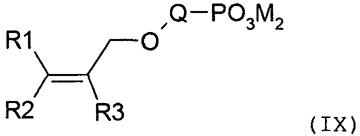

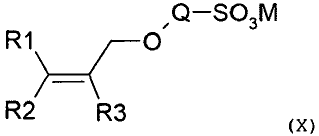

Particularly, the first and the second monomer each comprise a vinylic group, and further comprise an acidic group chosen from a sulphonic acid, phosphonic acid or phosphoric acid group, or a water soluble salt thereof. Preferably, use is made of the salt, i.e. the sulphonate, phosphonate, phosphorate. It is observed that reference is made herein and below to the acids and the acidic group, whereas in a preferred embodiment according to the invention, at least 80% , more preferably at least 90% and most preferably all or substantially all acidic groups are present as a negatively charged conjugate base in the presence of a cation.

Preferred examples of monomers are vinyl sulphonic acid, also referred to as ethylene sulphonic acid with EINECS number 214-676-1, the sodium salt of 2-methyl-2-propylene-1-sulphonic acid with EINECS number 216-341-5 and vinyl phosphonic acid with EINECS number 217-123-2.

According to the invention, the second monomer is structurally different from the first monomer. As defined in the formulas, the first monomer is suitably a vinylic monomer with an acidic group coupled thereto, or with an alkylene group between the acidic group and the double bond. This alkylene group is suitably a methylene or ethylene group. The alkylene group could furthermore be a substituted methylene group. Possible substituents including methyl, ethyl, halogens such as fluorine, chlorine.

The spacer in the second monomer suitably comprises an alkylene-chain between the acidic group and the acrylic group. The alkylene chain is more preferably a lower alkylene group, such as methylene, ethylene, propylene, butylene, isobutylene, tert-butylene, or ethyl-substituted ethylene, or longer such as pentylene, hexylene. Alkyleneoxides and aryl groups are not excluded.

Preferably, the first and the second monomer are present in the reaction mixture in their salt form. Therewith, a high degree of neutralization, up to 100%, is inherently achieved in accordance with the invention. It was found that the solubility of the first and the second monomer in the salt form in water is high. There is therefore no limitation to the pH range of the reaction mixture, and hence no limitation of the neutralization degree. In a further preferred embodiment, the water soluble salts of the first and the second monomer are formed from sodium, potassium, lithium, ammonium or amine salts, or from a combination thereof.

Preferably, the first monomer comprises a vinylic compound, such as a vinylsulphonate or a vinylphosphonate, i.e. wherein the acidic group is arranged adjacent to the double bond (no intermediate alkylene group Q).
Preferably, the second monomer comprises an acrylamidoaryl or acrylamidoalkyl sulphonic acid or a salt thereof, particularly a compound of the formula (V) wherein n = 0 or 1; R1, R2, R3 represent hydrogen, optionally substituted alkyl or aryl group, Q represents an alkylene group and M represents hydrogen or cation.

In a further preferred embodiment, the second monomer comprises a n-sulphoaryl or n-sulphoalkyl- or n-sulphoalkylenoxide-(alkyl)_acrylate or a salt thereof, in particular a compound of the formula (VI), wherein n = 0 or 1; R1, R2, R3 represent hydrogen, optionally substituted alkyl or aryl group, Q represents an alkylene group and M represents hydrogen or cation.

In a further preferred embodiment, the second monomer comprises styrene sulphonic acid or a salt thereof, in particular a compound of the formula (VII), wherein R1, R2, R3 represent hydrogen, optionally substituted alkyl or aryl group, and M represents hydrogen or cation with n=1 or 2. The phenyl-sulphonic acid has good electron-withdrawing performance and is sufficiently large.

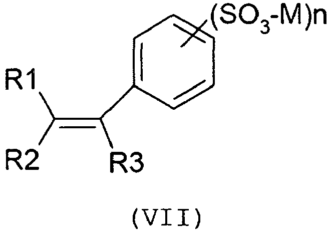

In again a further preferred embodiment, the second monomer comprises n-phosphoalkyl (alkyl)acrylate or n-phosphoaryl (alkyl)acrylate or n-phosphoalkyleneoxide-(alkyl)acrylate or a salt thereof, in particular a compound of the formula (VIII) wherein R1, R2, R3 represent hydrogen, optionally substituted alkyl or aryl group, Q represents an optionally substituted alkylene, arylene or alkyleneoxide entity, and M represents hydrogen or cation, and X = 1 or 2, and y = 3-X.

In again a further embodiment, the second monomer comprises an allylalkylphosphonic acid, an allyloxyalkyl sulphonic acid or a salt thereof, in particular a compound of the formulas (IX) or (X), wherein R1, R2, R3 represent hydrogen, optionally substituted alkyl or aryl group, Q represents an optionally carbohydrate entity.

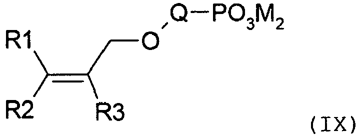

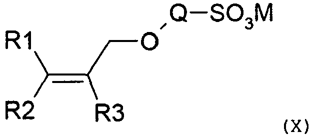

Optionally, the second monomer comprises 2-acrylamido-2-methylpropane sulphonic acid, or 3-acryloxypropane-1-sulphonic acid, or a water soluble salt thereof, or a combination of one of these.

In a preferred embodiment, the molar ratio of the first and the second monomer is at most 1. More preferably, the weight percentage of the first monomer relative to all monomers that contain acidic groups (i.e. the first and the second monomers) is in the range of 1-40wt%, suitably 5-30wt% and or 10-25%. Preferably, the amount of the first monomer is at least 5wt% of the total amount of monomer, for instance at least 7wt%, more preferably at least 10wt%. This is particularly suitable if the first monomer is a vinylic compound and the second monomer is an alkyl-acrylic compound. The addition of the first monomer to the second monomer according to this ratio leads to a significant increase in swelling. Also, it was found that the polymerization is problematic, at least in the aqueous environment, when the amount of the second monomer with an acrylic group is not high enough.

In again a further embodiment, the polymer may contain a third monomer. The third monomer may be an ethylene, propylene or vinylic compound without acidic group, or alternatively an amide such as an acryl amide. Therewith the polymer chain is made longer and more hydrophobic and the density of acidic groups is reduced. This may be beneficial for its physical properties. Preferably, the third monomer comprises adhesive functionality to a substrate. Such adhesive functionality is suitably embodied as side groups. In this manner, such functionality may be grafted onto the polymer. The third monomer could further be a monomer with crosslinking functionality, as an alternative to a separate crosslinker. If present the third monomer is suitably present in an amount of at most 20%, preferably at most 10%, more preferably at most 5% or at most 2%.

Preferably, the aqueous poly-electrolyte composition of the invention is free of an acrylic acid. Suitably, it is also free of primary amide (C=O)-NH monomer, which does not contribute to the swelling degree but may be toxic (and is thus a third monomer). In the event that an acrylic acid would be present in the invention, its content relative to the first monomer is suitably at most 20%, and more preferably at most 10, more preferably less than 5% or even less than 2%. Any acryl amide is suitably present in an amount of at most 20%, preferably at most 10%, for instance less than 5%. It is observed that the examples in US4,585,485 show a polymerization wherein the acryl amide monomer is the primary monomer rather than an additional one. Furthermore, in the examples wherein acryl amide is present as a minority, the amount of first monomer is either too high to allow polymerization in an aqueous environment or the amount of the first monomer is very low, resulting in a low swelling degree.

In a preferred embodiment, the reaction mixture of the invention comprises a crosslinking monomer comprising at least two polymerisable vinyl groups. Preferably, this crosslinking monomer is N,N'-methylenebisacrylamide. The use of a separate crosslinker monomer (i.e. compound) is suitable, in order to vary the ratio between the crosslinker and the (other) monomers. With this ratio, the rigidity of the final crosslinked network can be defined. By reducing the amount of crosslinker, the resulting network becomes less rigid and more open. This tends to result in a higher swelling degree, but at the disadvantage of degradation in mechanical properties. Such degradation may have the consequence that the polymer cannot be processed into a desired shape, or that the material cannot retain sufficient water due to insufficient strength. The amount of crosslinker is suitably less than 0.2wt%, more preferably less than 0.1 wt% relative to the amount of monomers that contain acidic groups (i.e. the sum of first and second monomers). Very good results even have obtained with crosslinking amount of 0.05wt% or less, such as 0.02-0.04wt%.

In a preferred embodiment, this crosslinking monomer is used in combination with a photoinitiator that polymerizes the first and the second monomer so as to obtain the hydrophilic comonomer compound present in the poly-electrolyte polymer composition of the invention. Optionally, the photoinitiator is 1-(4-(2-hydroxyethoxy)-phenyl)-2-hydroxy-2-methyl-1-propanone, particularly IC2959 of BASF.

Suitably, the formation of the polyelectrolyte copolymer is followed by a drying step. Herewith, any water resulting from the preparation will be removed, so that the subsequent absorption is maximized.

For sake of clarity, it is added that more than one monomer can be used as the first monomer. Moreover, more than one monomer can be used as the second monomer.

The present invention also provides a hydrogel obtained from said poly-electrolyte polymer composition.

The polyelectrolyte composition of the present invention may be used to be impregnated into a substrate or for coating of a substrate.

The present invention further provides a substrate wherein the polyelectrolyte copolymer of the invention is used, either as a coating, or as a major constituting element. Substrates such as wires and cables, textile fibers, yarns, foils and the like may be easily coated by the use of application techniques sufficiently known by the person skilled in the art, such as immersion, the use of a spray head, spraying, application by means of transfer rolls or by means of a similar technique.

The coating formulation may contain in these and similar cases effective amounts of additives and active components well-known to the skilled person such as crosslinkers, polymerization rate modifiers, chain regulators, polymerization initiators, viscosity regulators, adhesion promotors, ingredients with a chelating effect, corrosion inhibitors, film formers, softening agents, humidifiers, plasticizers, means for reducing adhesion, anti-blocking means, colorants and pigments, fillers, etc.

According to an important embodiment, the polymerization into the poly-electrolyte polymer composition is started by irradiation, and preferably irradiation with UV-radiation. The UV-radiation may be of a broad spectrum or alternatively of a narrow band in dependence of the sensitivity of the initiators for the reaction, i.e. the photochemical initiators. The use of radiation as a stimulus has the advantage, in comparison to the use of heat as in the prior art, of better stability of an initial monomer or oligomer composition. It is enabled by the avoidance of acrylic acid of which polymerization is initiated by heat. The prior art of EP1522545 is moreover highly sensitive to precipitation of monomers, resulting from water evaporation and/or pH-changes. Such precipitation will reduce the effective yield. Moreover, it largely inhibits the in situ polymerization.

For sake of clarity it is added that the embodiments and implementations described hereinabove are applicable to any of the aspects of the invention.

### Detailed description

The invention is hereinafter discussed under reference to certain preferred embodiments. It is however to be understood that these preferred embodiments are merely illustrations of the principles and applications of the present invention. It will be understood that many modifications may be applied to these preferred embodiments that are shown here for illustrative purposes and that alternative embodiments may be realized without deviating from the spirit and the scope of the present invention as herein elucidated.

### Example 1

3.94 g of a 25% aqueous solution of sodium vinylsulphonate is mixed with 15.76 g of a 50% aqueous solution of the sodium salt of 2-acrylamido-2-methyl-1-propane sulphonic acid. To this mixture are added 0.006 g N,N'-methylenebisacrylamide and 0.3 g 1-[4-(2-hydroxyethoxy)phenyl]-2-hydroxy-2-methyl-1-propanone. The mixture is further stirred on a temperature of 60 °C until all ingredients have been dissolved.

The reaction mixture is brought to room temperature before it is transferred with a pipet into a silicone mould having dimensions of 8 cm length, 1 cm width and 0.5 cm height, in order to manufacture a block-shaped piece of the final copolymer. The surface of the liquid is covered with a polypropylene film and the reaction mixture is cured thereafter by irradiating the top side of the cover film with simultaneously UV-radiation of 254 nm and of 365 nm during 20 minutes. The cured block-shaped polymer piece is taken out of the mould and is dried under atmospheric conditions under no further weight loss can be shown.

A small portion of the dry polymer, with dimensions of about 1 cm by 1 cm by 0.5 cm, is cut from the block-shaped piece and is weighted as a dry mass in a beaker of 500 ml. 300 ml demineralized water is poured onto this portion of dry copolymer and the swelling process is left undisturbed until an equilibrium state is arrived . The swollen hydrogel is finally filtrated on a sieve with small openings and the hydrogel is again weighted in swollen state. The degree of swelling is then calculated by means of following formula: (mass of the swollen hydrogel/ dry mass). In this case, a swelling degree of 300 was found.

### Example 2

The same reaction mixture of example 1 is applied as a very thin coating layer on a polyester fiber to a line speed of 20 m/min by means of an immersion tank. The coated fiber is hereinafter cured on the line itself by means of a mercury (Hg) UV lamp (UVAPRINT HV, 200 W/cm), and dried in an oven of 1.5 m size on a temperature of 260 °C. The resulting fiber is wound on a bobbin. This in-line coating process resulted in a fiber comprising a dry in water swell able coating. After swelling of merely 10 minutes in demineralized water, the coating had already absorbed water in an amount of 200 fold of its own mass.

### Example 3

A reaction mixture is made consisting of 1.98 g of a 25% aqueous solution of sodium vinyl sulphonate, 7.92 g of a 50% aqueous solution of potassium 3-sulphopropyl acrylate, 0.1 g of 1-[4-(2-hydroxyethoxy)phenyl]-2-hydroxy-2-methyl-1-propanone and 0.003 g of N,N'-methylenebisacrylamide, according to the same methodology as described in Example 1. The swelling degree of the cured copolymer composition had a value of 260.

### Example 4

Further compounds were prepared in accordance as described in accordance with Example 1 and 3, however with variation of monomers and their ratios. Use was made of sodium vinylsulphonate (SVS, 25wt% aqueous solution), and disodium vinylphosphonate (di-SVPA) as first monomers. Use was made of sodium 2-acrylamido-2-methyl-1-propane sulphonate (SAMPS, 50 wt% aqueous solution) and potassium 3-sulphopropyl-acrylate (PSPAA) as second monomers. The compounds were made using the crosslinker (CL) of examples 1 and 3. Subsequently the swelling degree (SD) was measured (H₂O take up capacity, g H₂O/gram material).

**Table 1 - amounts of reagents, crosslinker (CL) and resulting swelling degree (SD). The amounts refer to the amounts of the starting materials in the commercially available form (i.e. either as a 25% or 50% aqueous solution or as a pure compound). If no value is indicated, this means that the polymer did not develop into a form suitable for water adsorption. Typically, the product was an emulsion rather than a water insoluble polymer.**

| nr | SVS | di-SVPA | SAMPS | PSPAA | Wt% CL | SD |
|---|---|---|---|---|---|---|
| C1 | 100 | 0 | 0 | 0 | 0,05 | - |
| C2 | 43 | 57 | 0 | 0 | 0,03 | - |
| C3 | 0 | 100 | 0 | 0 | 0,03 | - |
| C4 | 0 | 0 | 100 | 0 | 0,05 | 60 |
| C5 | 0 | 0 | 0 | 100 | 0,03 | 138 |
| C6 | 0 | 0 | 94 | 6 | 0,03 | 123 |
| 1 | 20 | 0 | 80 | 0 | 0,03 | 308 |
| 2 | 30 | 0 | 70 | 0 | 0,03 | 540 |
| 3 | 40 | 0 | 60 | 0 | 0,03 | 473 |
| 4 | 0 | 7 | 93 | 0 | 0,03 | 154 |
| 5 | 0 | 10 | 90 | 0 | 0,03 | 200 |
| 6 | 0 | 14 | 86 | 0 | 0,03 | 187 |
| 7 | 33 | 0 | 0 | 67 | 0,03 | 258 |

### Comparative example 1

A reaction mixture was prepared by using 4.99 g 2-hydroxyethylacrylate and 0.008 g bis-acylfosfinoxide (BAPO, Irgacure 819), according to the same methodology as described in example 1, i.e. the initial mixture is stirred to obtain a solution under which heat is liberated. It is then brought to room temperature before the mixture is inserted into a silicone mould and curing is initiated by means of exposure to UV-irradiation. The swelling degree of this cured polymer composition had a value of merely 6.

### Comparative example 2

A reaction mixture was prepared by using 49.99 g of a 25% aqueous solution of sodium vinyl sulphonate, 49.99 g 2-hydroxyethylacrylate, 0.01 g N,N'-methylenebisacrylamide and 2.04 g of 1-[4-(2-hydroxyethoxy)phenyl]-2-hydroxy-2-methyl-1-propanone according to the same methodology as described in example 1. The degree of swelling of this cured copolymer composition reached a value of 20 only.

### Comparative example 3

Example 2 of US4,585,845 was reworked with the composition specified as nr 5 in Table 1 therein (column 15-16), except for using a different cross-linker, which was an UV-curable crosslinker as used in Example 1. The specified monomers are acryl amide (5%), 2-acrylinudo-2-methylpropane-1-sulphonic acid (20%), vinylphosphonic acid (74.7%) and vinylsulphonic acid sodium salt (SVS, 8%). A monomer solution is prepared in a polymerization flask of 1 liter capacity and equipped with a ground-glass lid, stirrer, thermometer and gas inlet tub. The acids were brought in the anionic form by raising the pH. Thereafter, polymerization was started by exposure to UV-irradiation. However, the solution did not convert into a gel, meaning that it was not possible to polymerize the solution. This is deemed due to the electronic repulsion of the mutual vinylphosphonic anion and the vinylsulphonic anion.

## Claims

1. A method of applying a poly-electrolyte composition to a carrier, which method comprising the steps of:
- Providing the carrier with an aqueous reaction mixture comprising at least a first hydrophilic monomer and a second hydrophilic monomer, and
- causing the monomers to polymerize on the carrier under the influence of an energy source wherein radical formation occurs and the polymerization is started and wherein crosslinking between individual polymer chains occurs, so as to form a water insoluble, crosslinked polyelectrolyte copolymer,
Wherein
- the first monomer is selected from the group consisting of vinylic sulphonic acids, vinyl phosphonic acids or a water soluble salt thereof as shown in the formula I-IV, 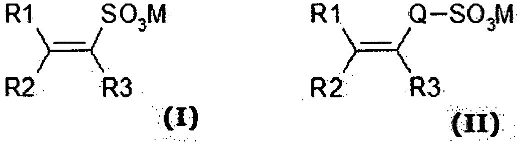 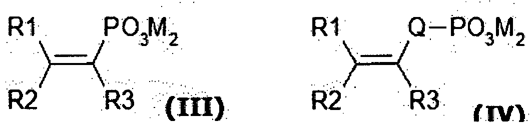 Wherein R1, R2, R3 represent hydrogen, optionally substituted alkyl or aryl group, Q represents an alkylene group and M represents hydrogen or cation, and
- the second monomer is a vinylic monomer with a double bond, which monomer comprises at least one acid group and a spacer group arranged between the double bond and the acid group, and
- the second monomer is different from the first monomer and at least one compound selected from the group consisting of monomers comprising an acid group being either in a free acid form or in a form of a water soluble salt, and of which the logarithm of the acid dissociation constant (pKa) in the free acid form has a value smaller than 3.5.

2. The method as claimed in Claim 1, wherein the spacer group in the second monomer is electron withdrawing.

3. The method as claimed in Claim 1 or 2, wherein the second monomer is chosen from the group consisting of compounds of any of the formula (V)-(X), wherein R1, R2, R3 represent hydrogen, optionally substituted alkyl or aryl group, Q represents an optionally substituted alkylene, arylene or alkyleneoxide entity and M represents hydrogen or cation, and wherein n=0 or 1 in formula (V) and (VI), n=1 or 2 in formula (VII) and x = 1 or 2 and y=3-x in formula (VIII).

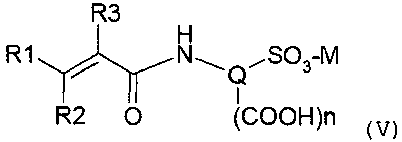

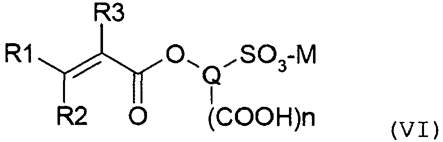

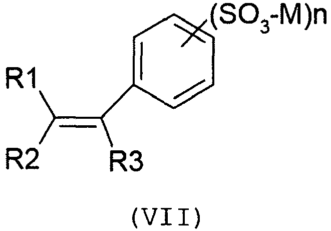

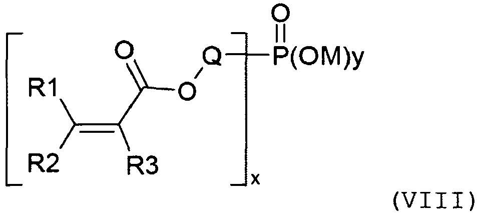

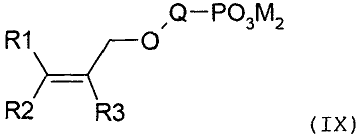

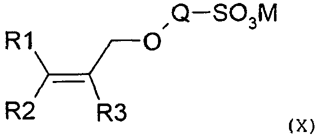

4. The method according to one of the preceding claims, wherein the first and the second monomer are present in the form of a water soluble salt for at least 80wt%, preferably at least 90wt% and most suitably substantially completely.

5. The method according to claim 1-3, **characterized in that** the second monomer is a compound of the formula (V) or (VI), wherein n = 0 or 1; R1, R2, R3 represent hydrogen, optionally substituted alkyl or aryl group, Q represents an alkylene group and M represents hydrogen or caption, wherein the alkylene group is preferably chosen from ethylene, propylene, 1-methylpropylene, 2-methylpropylene, 3-methylpropylene, 1-ethylethylene, 1-methylethylene, 1,1-dimethylethylene, butylenes.

6. The method as claimed in Claim 5, **characterized in that** the second monomer comprises 2-acrylamido-2-methylpropane-1- sulphonic acid, 3-acryloxypropane-1-sulphonic acid or a water soluble salt thereof, or a combination of one of these.

7. The method as claimed in any of the preceding Claims, **characterized in that** the first monomer comprises vinyl sulphonic acid, 2-methyl-2-propylene-1-sulphonic acid, vinyl phosphonic acid or a water soluble salt thereof, or a combination of one of these.

8. The method as claimed in any of the preceding polymer composition as claimed in any of the preceding claims, wherein the crosslinking occurs due to the presence of a crosslinking monomer comprising at least two polymerisable groups, wherein the crosslinking monomer is N,N'-methylene-bisacrylamide.

9. The method as claimed in any of the preceding claims, wherein a water-soluble or water-dispersable photochemical initiator is present for initiating the polymerization under the influence of UV-radiation.

10. The method as claimed in any of the preceding claims, wherein the first monomer is present in a concentration of 1-40wt%, said concentration being defined relative to the sum of the first and the second monomers.

11. A carrier provided with a poly-electrolyte copolymer obtainable with the method as claimed in any of the claims 1-10.

12. The carrier as claimed in Claim 11, wherein the carrier is a fiber, such as a textile fiber or an optical or electrical cable.

13. Use of the carrier as claimed in any of the claims 11-12 for adsorption of humidity, therewith forming the hydrogel.

14. An aqueous poly-electrolyte composition comprising a first and a second hydrophilic monomer, a crosslinker and a photochemical radical initiator, which composition is capable of forming an insoluble polymer upon exposure to UV-radiation, wherein
- the first monomer is selected from the group consisting of vinylic sulphonic acids, vinyl phosphonic acids or a water soluble salt thereof as shown in the Figures I-IV, wherein R1, R2, R3 represent hydrogen, optionally substituted alkyl or aryl group, Q represents an alkylene, alkoxide or aryl group and M represents hydrogen or cation, and 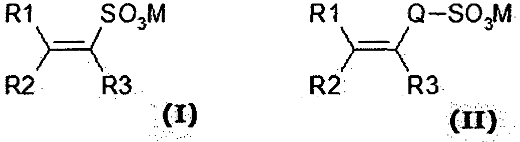 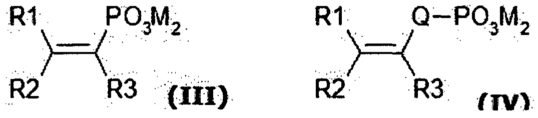
- the second monomer is a vinylic monomer with a double bond, which monomer comprises at least one acid group and an electron-withdrawing spacer group arranged between the double bond and the acid group, and
- the second monomer is different from the first monomer and at least a compound selected from the group consisting of monomers comprising an acid group being either in a free acid form or in a form of a water soluble salt, and of which the logarithm of the acid dissociation constant (pKa) in the free acid form has a value smaller than 3.5, and
- the molar ratio between the first and the second monomer is at most 1.

15. Use of the aqueous composition as claimed in Claim 14 for polymerization into a hydrogel.

## Patentansprüche

1. Verfahren zum Anwenden einer Poly-Elektrolyt-Zusammensetzung auf einen Träger, wobei das Verfahren die folgenden Schritte umfasst:
- Versehen des Trägers mit einer wässrigen Reaktionsmischung, welche zumindest ein erstes hydrophiles Monomer und ein zweites hydrophiles Monomer umfasst, und
- Bewirken, dass die Monomere auf dem Träger unter dem Einfluss von einer Energiequelle polymerisieren, wobei eine Radikalbildung auftritt und die Polymerisation gestartet wird, und wobei eine Vernetzung zwischen einzelnen Polymerketten auftritt, um so ein nicht wasserlösliches, vernetztes Poly-Elektrolyt-Copolymer zu bilden,
wobei
- das erstes Monomer ausgewählt ist aus der Gruppe bestehend aus Vinyl-Sulfonsäuren, Vinyl-Phosphonaten oder wasserlöslichen Salzen davon, wie in der Formel I - IV gezeigt ist 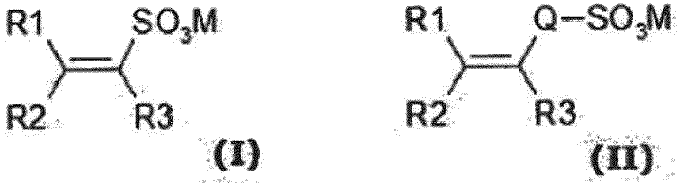 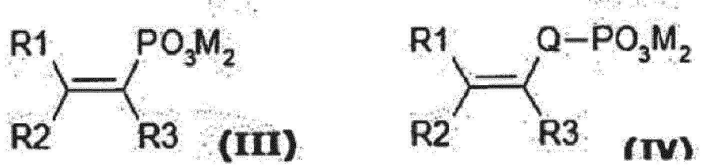 wobei R1, R2, R3 Wasserstoff repräsentieren, optional substituierte Alkyl- oder Aryl-Gruppen, Q eine Alkylengruppe repräsentiert, und M Wasserstoff oder ein Kation repräsentiert, und
- das zweite Monomer ein Vinyl-Monomer mit einer Doppelbindung ist, wobei das Monomer zumindest eine Säuregruppe und eine Abstandsgruppe angeordnet zwischen der Doppelbindung und der Säuregruppe, umfasst und
- das zweites Monomer unterschiedlich ist zu dem ersten Monomer und zumindest einer Verbindung, welche ausgewählt ist aus der Gruppe bestehend aus Monomeren, welche eine Säuregruppe umfassen, welche entweder in Form einer freien Säure oder in Form eines wasserlöslichen Salzes ist, und von welcher der Logarithmus der Säure-Dissoziationskonstante (pKa) in der freien Säureform einen Wert von kleiner als 3,5 aufweist.

2. Verfahren gemäß Anspruch 1, wobei die Abstandsgruppe in dem zweiten Monomer elektronenziehend ist.

3. Verfahren gemäß Anspruch 1 oder 2, wobei das zweites Monomer ausgewählt ist aus der Gruppe bestehend aus Verbindungen von einer der Formeln (V) - (X), wobei R1, R2, R3 Wasserstoff repräsentieren, optional substituierte Alkyl- oder Aryl-Gruppen, Q ein optional substituiertes Alkylen, Arylen oder eine Alkylenoxideinheit repräsentiert, und M Wasserstoff oder ein Kation repräsentiert, und wobei n = 0 in der Formel (V) und (VI) ist, n = 1 oder 2 in der Formel (VII) ist, und x = 1 oder 2 und y = 3 - x in der Formel (VIII) ist.

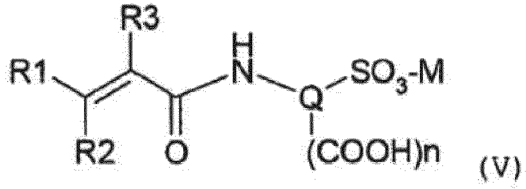

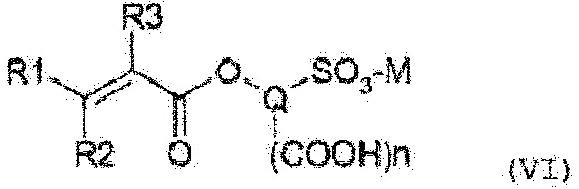

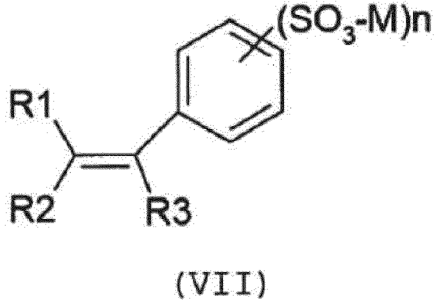

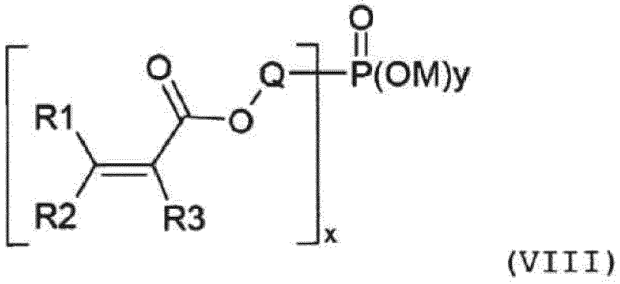

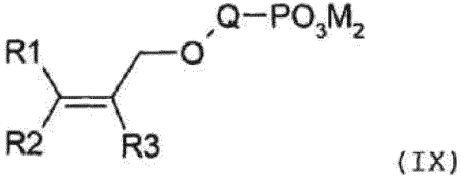

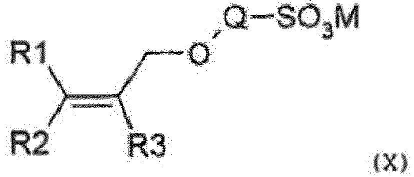

4. Verfahren gemäß einem der vorhergehenden Ansprüche, wobei das erste und das zweite Monomer in der Form eines wasserlöslichen Salzes für zumindest 80 Gew. % vorhanden sind, vorzugsweise zumindest 90 Gew. %, und am meisten bevorzugt im Wesentlichen vollständig.

5. Verfahren gemäß den Ansprüchen 1 - 3, **dadurch gekennzeichnet, dass** das zweite Monomer eine Verbindung mit der Formel (V) oder (VI) ist, wobei n = 0 oder 1 ist; wobei R1, R2, R3 Wasserstoff repräsentieren, optional substituierte Alkyl- oder Aryl-Gruppen, Q eine Alkylengruppe repräsentiert, und M Wasserstoff oder ein Kation repräsentiert, wobei die Alkylengruppe ausgewählt ist aus Ethylen, Propylen, 1-Methylpropylen, 2-Methylpropylen, 3-Methylpropylen, 1-Ethylenethylen, 1-Methylenethylen, 1,1-Dimethyletylen, Butylen.

6. Verfahren gemäß Anspruch 5, **dadurch gekennzeichnet, dass** das zweite Monomer 2-Arcrylamid-2-Methylpopan-1-Sulfonsäure, 3-Acryloxypropan-1-Sulfonsäure oder ein wasserlösliches Salz davon oder eine Kombination von einem von diesen umfasst.

7. Verfahren gemäß einem der vorhergehenden Ansprüche, **dadurch gekennzeichnet, dass** das erste Monomer Vinylsulfonsäure, 2-Methyl-2-Propylen-1-Sulfonsäure, Vinyl-Phosphonat-Säure oder ein wasserlösliches Salz davon oder eine Kombination von einem von diesen umfasst.

8. Verfahren wie in einer vorhergehenden Polymerzusammensetzung gemäß einem der vorhergehenden Ansprüche beansprucht, wobei die Vernetzung aufgrund des Vorhandenseins eines Vemetzungsmonomers auftritt, welches zumindest zwei polymerisierbare Gruppen umfasst, wobei das Vemetzungsmonomer N-N'-Methylen-Bisarcylamid ist.

9. Verfahren gemäß einem der vorhergehenden Ansprüche, wobei ein wasserlöslicher oder in Wasser dispergierbarer photochemischer Initiator vorhanden ist zum Initiieren der Polymerisation unter dem Einfluss von UV-Strahlung.

10. Verfahren gemäß einem der vorhergehenden Ansprüche, wobei das erste Monomer in einer Konzentration von 1 - 40 Gew. % vorhanden ist, wobei die Konzentration relativ zu der Summe aus den ersten und zweiten Monomeren definiert wird.

11. Träger, welcher mit einem Poly-Elektrolyt-Copolymer versehen ist, erhältlich durch das Verfahren gemäß einem der Ansprüche 1 - 10 erhalten werden kann.

12. Träger gemäß Anspruch 11, wobei der Träger eine Faser ist, beispielsweise eine Textilfaser oder ein optisches oder elektrisches Kabel.

13. Verwendung des Trägers gemäß einem der Ansprüche 11 - 12 zur Adsorption von Feuchtigkeit, wodurch ein Hydrogel gebildet wird.

14. Wässrige Poly-Elektrolyt Zusammensetzung, welche ein erstes und ein zweites hydrophiles Monomer, einen Vernetzer und einen photochemischen Radikal-Initiator umfasst, wobei die Zusammensetzung in der Lage ist, ein nicht lösliches Polymer auf ein Aussetzen an UV-Strahlung hin zu bilden, wobei
- das erste Polymer ausgewählt ist aus der Gruppe bestehend aus Vinyl-Sulfonsäuren, Vinyl-Phosphonaten oder einem wasserlöslichen Salz davon, wie in Figuren I - IV gezeigt ist,
wobei R1, R2, R3 Wasserstoff repräsentieren, optional substituierte Alkyl- oder Aryl-Gruppen, Q eine Alkylengruppe repräsentiert, und M Wasserstoff oder ein Kation repräsentiert, und 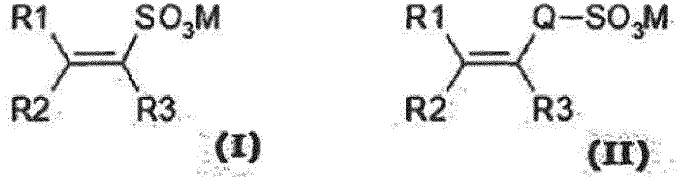 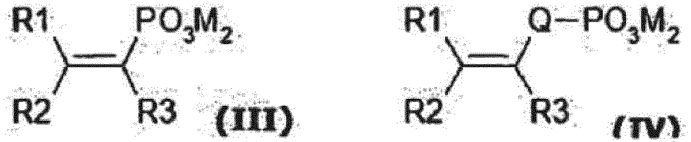
- das zweite Monomer einen Vinyl-Monomer mit einer Doppelbindung ist, wobei das Monomer zumindest eine Säuregruppe und eine elektronenziehende Abstandsgruppe angeordnet zwischen der Doppelbindung und der Säuregruppe umfasst, und
- das zweite Monomer unterschiedlich ist zu dem ersten Monomer und zu zumindest einer Verbindung, welche ausgewählt ist aus der Gruppe bestehend aus Monomeren, welche eine Säuregruppe umfassen, welche entweder in Form einer freien Säure oder in Form eines wasserlöslichen Salzes ist, und von welcher der Logarithmus der Säure-Dissoziationskonstante (pKa) in der freien Säureform einen Wert von kleiner als 3,5 aufweist, und
- wobei das Molverhältnis zwischen dem ersten und dem zweiten Monomer höchstens 1 beträgt.

15. Verwendung der wässrigen Zusammensetzung wie in Anspruch 14 beansprucht zur Polymerisation zu einem Hydrogel.

## Revendications

1. Procédé d'application d'une composition de poly-électrolyte sur un support, lequel procédé comprenant les étapes suivantes :
- la fourniture au support d'un mélange réactionnel aqueux comprenant au moins un premier monomère hydrophile et un deuxième monomère hydrophile, et
- le fait d'amener les monomères à polymériser sur le support sous l'influence d'une source d'énergie dans lequel une formation de radicaux a lieu et la polymérisation est initiée et dans lequel une réticulation entre des chaînes polymères individuelles a lieu, afin de former un copolymère de polyélectrolyte réticulé insoluble dans l'eau,
dans lequel
- le premier monomère est sélectionné dans le groupe constitué par les acides sulfoniques vinyliques, les acides vinyl phosphoniques ou un sel hydrosoluble de ceux-ci tel que représenté par les formules I à IV, 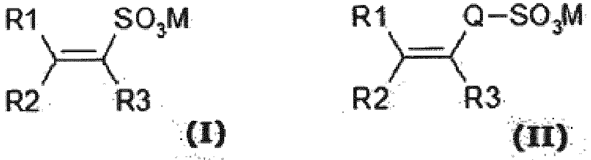 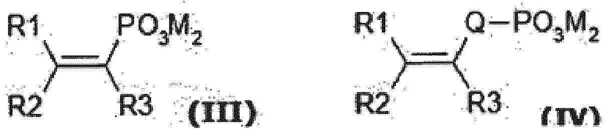 dans lesquelles R1, R2, R3 représente un hydrogène, un groupe alkyle ou aryle facultativement substitué, Q représente un groupe alkylène et M représente un hydrogène ou un cation, et
- le deuxième monomère est un monomère vinylique ayant une liaison double, lequel monomère comprend au moins un groupe acide et un groupe espaceur agencé entre la liaison double et le groupe acide, et
- le deuxième monomère est différent du premier monomère et au moins un composé sélectionné dans le groupe constitué par les monomères comprenant un groupe acide étant soit sous forme d'acide libre, soit sous forme d'un sel hydrosoluble, et dont le logarithme de la constante de dissociation d'acide (pKa) sous la forme d'acide libre a une valeur inférieure à 3,5.

2. Procédé selon la revendication 1, dans lequel le groupe espaceur dans le deuxième monomère est attracteur d'électrons.

3. Procédé selon la revendication 1 ou 2, dans lequel le deuxième monomère est choisi dans le groupe constitué par les composés de l'une quelconque des formules (V) à (X), dans lesquelles R1, R2, R3 représente un hydrogène, un groupe alkyle ou aryle facultativement substitué, Q représente une entité alkylène, arylène ou oxyde d'alkylène facultativement substituée et M représente un hydrogène ou un cation, et dans lequel n = 0 ou 1 dans les formules (V) et (VI), n = 1 ou 2 dans la formule (VII) et x = 1 ou 2 et y = 3 - x dans la formule (VIII).

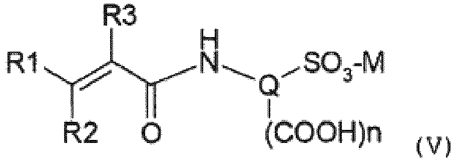

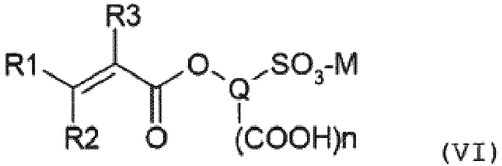

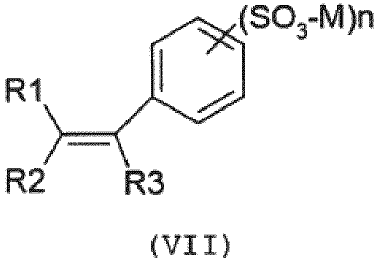

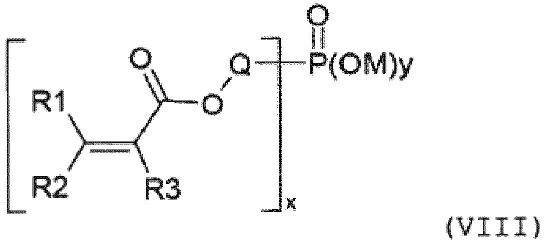

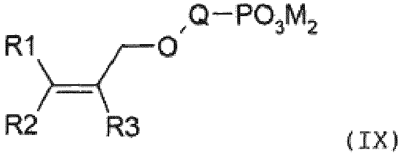

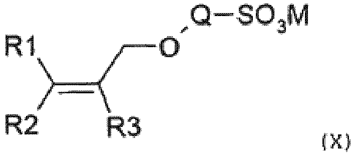

4. Procédé selon l'une quelconque des revendications précédentes, dans lequel le premier et le deuxième monomère sont présents sous la forme d'un sel hydrosoluble pour au moins 80 % en poids, de préférence au moins 90 % en poids et de manière la plus appropriée sensiblement complètement.

5. Procédé selon les revendications 1 à 3, **caractérisé en ce que** le deuxième monomère est un composé de formule (V) ou (VI), dans lesquelles n = 0 ou 1 ; R1, R2, R3 représente un hydrogène, un groupe alkyle ou aryle facultativement substitué, Q représente un groupe alkylène et M représente un hydrogène ou un cation, dans lequel le groupe alkylène est choisi de préférence parmi l'éthylène, le propylène, le 1-méthyl-propylène, le 2-méthylpropylène, le 3-méthylpropylène, le 1-éthyléthylène, le 1-méthyléthylène, le 1,1-diméthyléthylène, les butylènes.

6. Procédé selon la revendication 5, **caractérisé en ce que** le deuxième monomère comprend l'acide 2-acrylamido-2-méthylpropane-1-sulfonique, l'acide 3-acryloxypropane-1-sulfonique ou un sel hydrosoluble de ceux-ci, ou une combinaison d'un de ceux-ci.

7. Procédé selon l'une quelconque des revendications précédentes, **caractérisé en ce que** le premier monomère comprend l'acide vinyl sulfonique, l'acide 2-méthyl-2-propylène-1-sulfonique, l'acide vinyl phosphonique ou un sel hydrosoluble de ceux-ci, ou une combinaison d'un de ceux-ci.

8. Procédé selon l'une quelconque de la composition de polymère précédente selon l'une quelconque des revendications précédentes, dans lequel la réticulation a lieu en raison de la présence d'un monomère de réticulation comprenant au moins deux groupes polymérisables, dans lequel le monomère de réticulation est le N,N'-méthylène-bisacrylamide.

9. Procédé selon l'une quelconque des revendications précédentes, dans lequel un initiateur photochimique hydrosoluble ou dispersible dans l'eau est présent pour initier la polymérisation sous l'influence d'un rayonnement UV.

10. Procédé selon l'une quelconque des revendications précédentes, dans lequel le premier monomère est présent à une concentration de 1 à 40 % en poids, ladite concentration étant définie par rapport à la somme du premier et du deuxième monomère.

11. Support pourvu d'un copolymère de poly-électrolyte pouvant être obtenu avec le procédé selon l'une quelconque des revendications 1 à 10.

12. Support selon la revendication 11, dans lequel le support est une fibre, telle qu'une fibre textile ou un câble optique ou électrique.

13. Utilisation du support selon l'une quelconque des revendications 11 et 12 pour l'adsorption de l'humidité, pour former avec celui-ci l'hydrogel.

14. Composition aqueuse de poly-électrolyte comprenant un premier et un deuxième monomère hydrophile, un agent de réticulation et un initiateur photochimique de radicaux, laquelle composition est capable de former un polymère insoluble lors d'une exposition à un rayonnement UV, dans laquelle
- le premier monomère est sélectionné dans le groupe constitué par les acides sulfoniques vinyliques, les acides vinyl phosphoniques ou un sel hydrosoluble de ceux-ci tel que représenté par les figures I à IV, dans lequel R1, R2, R3 représente un hydrogène, un groupe alkyle ou aryle facultativement substitué, Q représente un groupe alkylène, alcoxyde ou aryle et M représente un hydrogène ou un cation, et 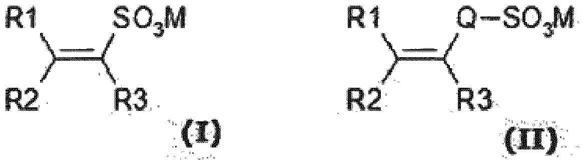 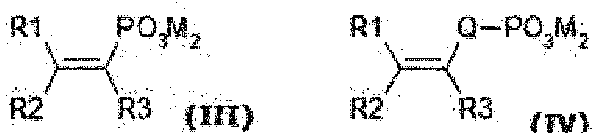
- le deuxième monomère est un monomère vinylique ayant une liaison double, lequel monomère comprend au moins un groupe acide et un groupe espaceur attracteur d'électrons agencé entre la liaison double et le groupe acide, et
- le deuxième monomère est différent du premier monomère et au moins un composé sélectionné dans le groupe constitué par les monomères comprenant un groupe acide étant soit sous forme d'acide libre, soit sous forme d'un sel hydrosoluble, et dont le logarithme de la constante de dissociation d'acide (pKa) sous la forme d'acide libre a une valeur inférieure à 3,5, et
- le rapport molaire entre le premier et le deuxième monomère est au plus de 1.

15. Utilisation de la composition aqueuse selon la revendication 14 à des fins de polymérisation en un hydrogel.
